# FASCICULE DE BREVET EUROPEEN

(11) **EP 3 117 599 B1**
(45) Date de publication et mention de la délivrance du brevet: **09.12.2020**
(21) Numéro de dépôt: 15707684.5
(22) Date de dépôt: 05.03.2015
(51) Int. Cl.: H04N 5/378

(54) **PROCÉDÉ DE CAPTURE D'IMAGE AVEC RÉDUCTION DE COURANT D'OBSCURITÉ ET FAIBLE CONSOMMATION**
VERFAHREN ZUR BILDERFASSUNG MIT VERMINDERUNG VON DUNKELSTROM UND NIEDRIGEM VERBRAUCH
METHOD OF IMAGE CAPTURE WITH REDUCTION OF DARK CURRENT AND LOW CONSUMPTION

(30) Priorité: 11.03.2014 FR 1451974
(43) Date de publication de la demande: 18.01.2017
(73) Titulaire: Teledyne e2v Semiconductors SAS, 38120 Saint-Egrève (FR)
(72) Inventeur: BARBIER, Frédéric, 38120 Fontanil-Cornillon (FR)
(74) Mandataire: Marks & Clerk France
(86) Numéro de dépôt international: PCT/EP2015/054651
(87) Numéro de publication internationale: WO 2015/135836

(56) Documents cités:
- EP-A2- 1 223 623
- WO-A1-2012/053127
- US-A1- 2006 097 296
- US-A1- 2008 122 941
- US-A1- 2014 015 012
- US-B1- 8 436 674
- US-B1- 8 436 674

## Description

L'invention concerne les capteurs d'image électronique à pixels actifs.

Ces capteurs utilisent un réseau de pixels en lignes et en colonnes, avec dans chaque pixel un élément photosensible et plusieurs transistors.

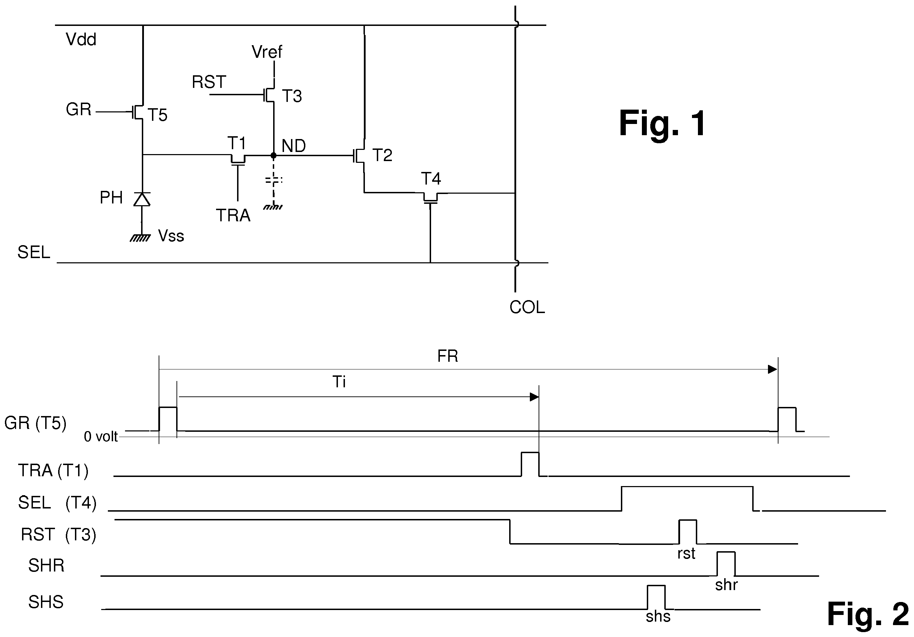

Une constitution avantageuse du pixel est une constitution telle que représentée à la figure 1, avec :
- une photodiode PH autopolarisée (en anglais : pinned photodiode),
- un nœud de stockage de charges ND, qui est l'équivalent d'une capacité,
- un transistor de transfert T1 pour isoler la photodiode du nœud de stockage ou au contraire autoriser un transfert de charges de la photodiode vers le nœud de stockage en vue de mesurer le potentiel du nœud de stockage après ce transfert,
- un transistor T2 de lecture de charges, monté en suiveur de tension, ayant sa grille reliée au nœud de stockage pour permettre de reporter le potentiel du nœud de stockage sur la source du transistor,
- un transistor T3 de réinitialisation du nœud de stockage, permettant de porter à une valeur de référence le potentiel du nœud de stockage pour mesurer ce potentiel de référence, en vue d'une mesure différentielle des potentiels du nœud de stockage en présence de charges issues de la photodiode et en l'absence de charges issues de la photodiode ;
- un transistor T4 de sélection de pixel, commandé par un conducteur SEL d'adressage en ligne, permettant de reporter sur un conducteur de colonne COL le potentiel de la source du transistor de lecture T2 ; le conducteur de ligne SEL est commun à tous les pixels d'une même ligne de pixels ; le conducteur de colonne COL est commun à tous les pixels d'une même colonne de pixels,
- enfin, éventuellement, un transistor supplémentaire T5 qui peut avoir l'une et/ou l'autre des deux fonctions suivantes : évacuer vers un drain d'anti-éblouissement les charges électriques en excédent dans la photodiode en cas d'éclairement trop fort, ou bien réinitialiser le potentiel de la photodiode en vidant complètement vers un drain les charges accumulées afin qu'elle reprenne son potentiel à vide avant de débuter une nouvelle période d'intégration ; le transistor T5 est facultatif et permet de définir un début de durée d'intégration commun à tous les pixels.

On notera qu'on utilise l'appellation "transistor" pour faciliter la compréhension en termes de schéma électrique tel que le schéma de la figure 1. Toutefois, dans la constitution physique du pixel, ces transistors ne sont pas nécessairement constitués de manière classique, indépendamment des autres éléments du pixel, avec une région de source, une région de drain, une région de canal séparant la source du drain et une grille isolée au-dessus du canal. Dans la constitution physique réelle du pixel, certains transistors sont en réalité constitués essentiellement par une grille isolée à laquelle on peut appliquer un potentiel de commande. Ainsi, par exemple, le transistor de transfert T1 est constitué par une grille de transfert isolée du substrat, surmontant une région qui est située entre la photodiode PH et une diffusion de type N+ constituant le nœud de stockage de charges ; la source du transistor T1 est la photodiode ; le drain du transistor est le nœud de stockage de charges. De même, le transistor T5 est constitué à partir d'une grille isolée, adjacente d'un côté à la photodiode (constituant la source du transistor), de l'autre à un drain d'évacuation de charges (constituant le drain du transistor).

Dans les capteurs de l'art antérieur, on a mis en évidence l'existence de ce qu'on appelle généralement un courant d'obscurité, c'est-à-dire une circulation de charges parasites même en l'absence d'éclairement, alors que l'absence d'éclairement devrait se traduire par une absence de charges. Ces charges parasites réduisent le rapport signal/bruit et sont particulièrement néfastes lorsqu'on mesure des éclairements faibles.

Une partie du courant d'obscurité est due aux défauts d'interface entre la région N de la photodiode et un oxyde de silicium isolant qui entoure la photodiode pour l'isoler des photodiodes voisines. Cet oxyde isolant, en général connu sous l'appellation STI, de l'anglais "Shallow Trench Isolation", est contenu dans une tranchée superficielle qui entoure toute la photodiode à l'exception du passage qu'il faut réserver pour transférer les charges de la photodiode (transistor T1) vers le nœud de stockage et à l'exception du passage qu'il faut éventuellement réserver pour vider les charges de la photodiode lors d'une réinitialisation (transistor T5). Les défauts d'interface piègent des électrons ; ces électrons sont ensuite libérés et attirés vers le nœud de stockage au moment du transfert de charges de la photodiode vers le nœud de stockage ; ils seront de ce fait considérés comme des charges utiles résultant de l'éclairement alors qu'ils sont en réalité des charges parasites ne résultant pas de l'éclairement.

Pour limiter au mieux cet effet, on a déjà proposé d'interposer entre la région de photodiode (de type N) et la tranchée remplie d'isolant, une région de type P. Cette région P est en contact avec la couche active de silicium de type P dans laquelle est formée la photodiode. Elle entoure la région N de la photodiode et empêche cette dernière d'être en contact direct avec la tranchée isolante. Elle sert de couche de passivation qui réagit avec la tranchée isolante pour neutraliser les charges parasites. Cependant, on ne peut pas, dans un processus industriel, placer une région de type P sous les grilles (qui sont en silicium polycristallin) du transistor de transfert T1 ou du transistor T5 lorsqu'il est présent ; la raison en est que l'implantation de type P doit en pratique être faite après la mise en place des grilles et qu'on ne peut donc pas implanter une impureté de type P sous les grilles ; les tranchées d'isolation en oxyde de silicium s'étendent pourtant sous les grilles et il aurait été préférable de les passiver par une région P là comme ailleurs.

Par conséquent, les régions semiconductrices sous les grilles des transistors T1 et T5 restent directement en contact avec de l'oxyde de silicium et sont susceptibles d'engendrer un courant d'obscurité néfaste, sur le principe de ce qui a été exposé ci-dessus.

On pourrait maintenir la grille du transistor de transfert T1 à un potentiel faiblement négatif (environ -0,7 volt) au lieu d'un potentiel nul pendant l'intégration de charges photogénérées. Cette tension permettrait d'attirer et accumuler des trous sous la grille ; les électrons piégés à l'interface oxyde/silicium se recombinent alors avec ces trous mobiles et disparaissent, éliminant ainsi le risque que des électrons indésirables se dirigent vers le nœud de stockage lors du transfert de charges de la photodiode vers le nœud de stockage.

Mais pour produire cette tension négative, alors que le circuit intégré est alimenté entre 0 volt et une tension positive de 3 à 5 volts, il faut utiliser une pompe de charge. Les pompes de charge ont un rendement faible, inférieur à 50% et parfois même inférieur à 30%. Elles consomment donc un courant bien supérieur au courant qu'elles doivent fournir.

Dans un mode de fonctionnement du capteur dit "global shutter", c'est-à-dire à durée d'exposition globale, la phase de transfert est simultanée pour tous les pixels du capteur. Toutes les grilles de transfert du réseau de pixels sont actionnées en même temps pour transférer les charges des photodiodes dans les nœuds de stockage. Pour un capteur de 2 millions de pixels l'appel de courant dans la pompe de charge pour revenir à un potentiel de -0,7 volt au moment où l'impulsion de transfert se termine peut dépasser 80 milliampères, et cela à condition de faire en sorte que le temps de descente de l'impulsion de commande soit forcé à au moins 300 nanosecondes pour que la transition ne soit pas trop brutale. Les 80 milliampères fournis par la pompe de charge pour décharger la capacité équivalente de toutes les grilles de transfert connectées en parallèle peuvent se traduire par une consommation globale de 250 milliampères en raison du faible rendement de la pompe de charge.

Pour résoudre le problème du courant d'obscurité sans créer une difficulté d'appel de courant très élevé au moment de la commutation de la grille de transfert de l'état haut à l'état bas ou inversement, l'invention propose d'effectuer cette commutation vers l'état bas en trois temps distincts qui sont un passage d'une tension positive à zéro (potentiel d'une borne d'alimentation du capteur) puis une stabilisation à zéro, puis un passage de zéro à une tension négative fournie par une pompe de charge. La plus grande partie des charges accumulées dans la grille de transfert pendant l'impulsion de transfert se décharge alors d'abord dans la borne d'alimentation à zéro volt (masse) et non dans la pompe de charge ; celle-ci assure seulement le passage des grilles des transistors de transfert de 0 volt à la faible tension négative (-0,7 volt par exemple).

Par conséquent, l'invention propose un procédé de capture d'image dans un capteur d'image à matrice de lignes et colonnes de pixels actifs, alimenté entre une première borne d'alimentation à potentiel zéro et une deuxième borne d'alimentation à un potentiel d'alimentation positif, dans lequel chaque pixel comporte une photodiode formée dans une couche active semiconductrice au potentiel de référence zéro, une grille de transfert de charges pour transférer les charges générées par la lumière de la photodiode vers un nœud de stockage de charges, et éventuellement une grille de réinitialisation du potentiel de la photodiode, le procédé comportant une étape de transfert global des charges des photodiodes de tous les pixels de la matrice vers les nœuds de stockage correspondants et éventuellement une étape de réinitialisation de toutes les photodiodes, caractérisé en ce que la grille de transfert et/ou la grille de réinitialisation est portée par une pompe de charge à un potentiel négatif pendant la majeure partie de la durée d'intégration de charges et reçoit un signal de commande de transfert ou de réinitialisation commun à tous les pixels pendant une fenêtre temporelle de transfert, le signal de commande de transfert ou de réinitialisation comportant successivement au moins une première phase pendant laquelle il passe du potentiel négatif à un potentiel de transfert positif, une deuxième phase pendant laquelle il passe du potentiel de transfert positif au potentiel zéro fourni par la première borne d'alimentation, une troisième phase de durée finie pendant laquelle il reste au potentiel zéro, et une quatrième phase dans laquelle il repasse du potentiel zéro au potentiel négatif fourni par la pompe de charge.

La pompe de charge sert à maintenir le potentiel négatif pendant la durée d'intégration, mais elle ne subit pas de fort appel de courant dans cette phase. Elle n'est pas utilisée pendant la deuxième et la troisième phase. Puis, elle sert à faire passer le potentiel de zéro au potentiel négatif à la fin du signal de commande de transfert, mais l'écart de potentiel est alors plus faible que l'écart qui existe entre le potentiel positif de la première phase et le potentiel négatif final. L'appel de courant dû à la décharge capacitive en est d'autant réduit. Le gain sur l'appel de courant est dans le rapport de ces deux écarts de tension.

Par exemple, le potentiel positif est de 3,3 volts et le potentiel négatif est de -0,7 volts. Le gain de consommation est dans le rapport 4 volts/0,7 volt soit environ 5,7.

Le passage du potentiel positif au potentiel zéro ne se fait pas par la pompe de charge, mais le courant de décharge capacitive passe directement dans la borne d'alimentation au potentiel zéro. Le rendement faible de la pompe de charge n'intervient donc pas dans cette phase.

Dans une réalisation, seule la descente de l'impulsion de transfert (ou de réinitialisation) subit une phase de passage par le potentiel zéro fourni directement par la première borne d'alimentation.

Dans une autre réalisation, pour des raisons de symétrie, on donne la même forme à la montée de l'impulsion de transfert, avec une phase de montée du potentiel négatif fourni par la pompe de charge au potentiel zéro fourni par la première borne d'alimentation, une phase de durée finie à ce potentiel, et une phase de montée du potentiel de zéro au potentiel positif qui assure le transfert de charges.

Des capteurs envisageant d'appliquer une tension négative sur la grille de transfert sont décrites dans les publications suivantes : US2008296630, US 8, 163 591, US 2009/0219418, US 2014/015012 A1, US 8 436 674 B1, et Bongki Mheen, Young-Joo Song, and Albert J. P. Theuwissen, Negative Offset Operation of Four-Transistor CMOS Image Pixels for Increased Well Capacity and Suppressed Dark Current. US2006097296 divulgue un capteur d'image incluant une pompe de charge (boost adjuster) pouvant fournir une tension négative à la grille de transfert d'un pixel.

D'autres caractéristiques et avantages de l'invention apparaîtront à la lecture de la description détaillée qui suit et qui est faite en référence aux dessins annexés dans lesquels :
- la figure 1, déjà décrite, représente un schéma électrique de pixel classique à cinq transistors ;
- la figure 2 représente un diagramme temporel du fonctionnement général du pixel ;
- les figures 3A et 3B représentent un exemple possible de forme selon l'invention des impulsions de commande de transfert ou de réinitialisation des photodiodes ;
- les figures 4A et 4B représentent des formes théoriques d'impulsions de commande de transfert ou de réinitialisation des photodiodes selon l'invention ;
- les figures 5A et 5B représentent la forme réelle des impulsions de commande, compte-tenu du temps de récupération de la pompe de charge ;
- la figure 6 représente un diagramme temporel du fonctionnement du capteur selon l'invention ;
- la figure 7 représente un circuit d'élaboration du signal de transfert ou de réinitialisation ;
- la figure 8 représente les signaux utilisés dans le circuit de la figure 7.

Sur la figure 2, on a représenté le chronogramme de fonctionnement classique d'un pixel à 5 transistors utilisant le cinquième transistor pour déclencher le début de la période d'intégration (fonctionnement en mode dit "global shutter"). Le fonctionnement en mode "global shutter" serait possible en l'absence de transistor T5, mais la durée d'intégration ne serait pas réglable, elle serait égale à la période FR.

Le fonctionnement est périodique avec une période de trame FR. La trame commence par une impulsion de réinitialisation GR appliquée à la grille du transistor T5 pour tous les pixels à la fois lorsqu'un tel transistor est prévu. L'impulsion vide les charges qui ont été intégrées par la lumière dans les photodiodes. La fin de l'impulsion GR marque le début de la durée d'intégration Ti, commune à tous les pixels. La fin de cette durée sera définie par la fin d'une impulsion de transfert TRA appliquée à la grille du transistor de transfert T1 ; cette impulsion, commune à tous les pixels dans le mode global shutter, transfère les charges intégrées de la photodiode vers le nœud de stockage ND.

Au cours de la durée d'intégration, avant l'impulsion TRA, un niveau de potentiel de réinitialisation (ligne RST) est appliqué à la grille du transistor T3 pour vider les charges qui peuvent être contenues dans le nœud de stockage. Ce signal est interrompu obligatoirement avant l'impulsion de transfert.

Après la durée d'intégration Ti, les pixels sont lus ligne par ligne, un signal de sélection (ligne SEL) étant appliqué successivement à chacune des lignes pour définir le moment de la lecture. Ce signal est représenté pour une seule ligne sur la figure 2 ; il est appliqué à la grille du transistor T4. La lecture se fait dans un circuit de lecture non représenté, situé au pied de chaque colonne de pixels et relié au conducteur de colonne COL respectif. Le circuit de lecture comprend notamment un circuit d'échantillonnage commandé par des impulsions shs et shr servant à échantillonner respectivement le niveau de potentiel utile du conducteur de colonne après l'impulsion de transfert TRA et le niveau de potentiel après réinitialisation. La mesure est faite par différence entre les deux échantillons à chaque période.

La phase de lecture pour une ligne donnée, définie par le créneau SEL appliqué à cette ligne, comprend successivement l'émission d'une impulsion d'échantillonnage shs, l'émission sur la grille du transistor T3 d'une impulsion rst de réinitialisation du nœud de stockage des pixels de la ligne considérée, et l'émission d'une impulsion d'échantillonnage shr. La différence des signaux échantillonnés est convertie par un convertisseur analogique-numérique non représenté.

Dans l'art antérieur, le signal de transfert TRA et le signal éventuel GR de réinitialisation des photodiodes, sont communs à tous les pixels et sont le plus souvent des impulsions partant de la tension de référence zéro volt qui est le potentiel de la couche active semiconductrice dans laquelle sont formées les photodiodes ; ces impulsions prennent une valeur positive pendant une brève durée et elles permettent le vidage des charges stockées dans la photodiode.

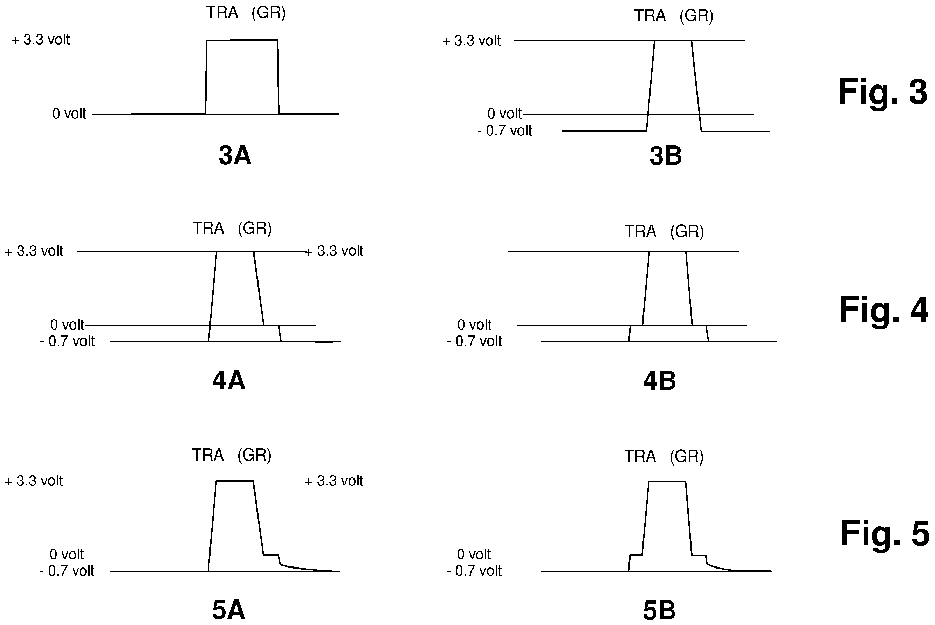

Le signal de commande de transfert ou de commande de réinitialisation a alors la forme rectangulaire représentée sur la figure 3A allant de zéro à un potentiel de transfert positif, qui peut être Vdd lorsque le capteur est alimenté entre deux bornes d'alimentation Vss (zéro) et Vdd positif. Vdd est typiquement de 3,3 volts.

Comme on l'a expliqué plus haut, la forme des impulsions pourrait être celle de la figure 3B si on maintient le signal de commande à une tension légèrement négative (de -0,7 volt par exemple) pendant la phase d'intégration et si on force les fronts de montée et de descente à avoir une durée minimale pour empêcher de trop forts appels de courant. La durée minimale des fronts est par exemple de 300 nanosecondes et la durée totale du signal TRA ou GR peut être d'environ 1 microseconde.

Selon l'invention, on donne au profil du signal de commande de transfert ou de réinitialisation une forme différente, représentée à la figure 4A, qui impose un passage du signal pendant une durée finie par le potentiel d'alimentation zéro, entre le moment où ce signal est à son niveau haut positif et le moment où il revient à son niveau bas négatif. Le signal de commande de transfert ou de réinitialisation se décompose donc en au moins une première phase pendant laquelle il passe du potentiel négatif à un potentiel de transfert positif (et s'y maintient de préférence pendant une durée de quelques centaines de nanosecondes), une deuxième phase pendant laquelle il passe du potentiel de transfert positif au potentiel zéro fourni par la première borne d'alimentation, une troisième phase de durée finie pendant laquelle il reste au potentiel zéro, et une quatrième phase dans laquelle il repasse du potentiel zéro au potentiel négatif fourni par la pompe de charge.

La durée de maintien au potentiel zéro peut être brève. Elle doit être suffisante pour permettre la décharge jusqu'à zéro des capacités de grille de tous les transistors de la matrice. Une centaine de nanosecondes suffit.

Facultativement, pour des raisons de symétrie et de simplification de la formation du signal, on impose également au cours de la première phase, comme cela est représenté sur la figure 4B, un passage par le potentiel d'alimentation zéro pendant une durée finie entre le moment où le signal est à son niveau bas négatif et le moment où il atteint son niveau haut positif.

Une pente de montée progressive jusqu'au potentiel positif est de préférence (mais pas obligatoirement) prévue dans la première phase pour limiter les appels de courant ; de même, une pente de descente progressive est de préférence prévue depuis le potentiel positif dans la deuxième phase. Les fronts de montée et descente peuvent alors durer entre 100 et 400 nanosecondes. Une pente de descente ou de montée semblable peut aussi, facultativement, être prévue dans la quatrième phase (descente de zéro à - 0,7 volt), ainsi que dans la montée du potentiel négatif au potentiel zéro.

Les formes de signal de commande représentées aux figures 4A et 4B peuvent être utilisées pour le signal de commande de transfert TRA et pour le signal de commande de réinitialisation GR lorsqu'un transistor de réinitialisation T5 est prévu et est activé pour définir le début de la durée d'intégration. Ces formes peuvent également être utilisées pour un seul de ces deux signaux, l'autre ne comportant pas de phase de maintien au potentiel d'alimentation zéro. Les formes de signal représentées aux figures 4A et 4B sont des formes théoriques représentées pour simplifier les explications. Les formes réelles sont plutôt celles qui sont représentées aux figures 5A et 5B comme on l'expliquera plus loin, en raison du fait que la tension produite par la pompe de charge (théoriquement -0,7 volt par exemple) de la pompe de charge met un certain temps à retrouver sa valeur nominale à partir du moment où elle entre en service.

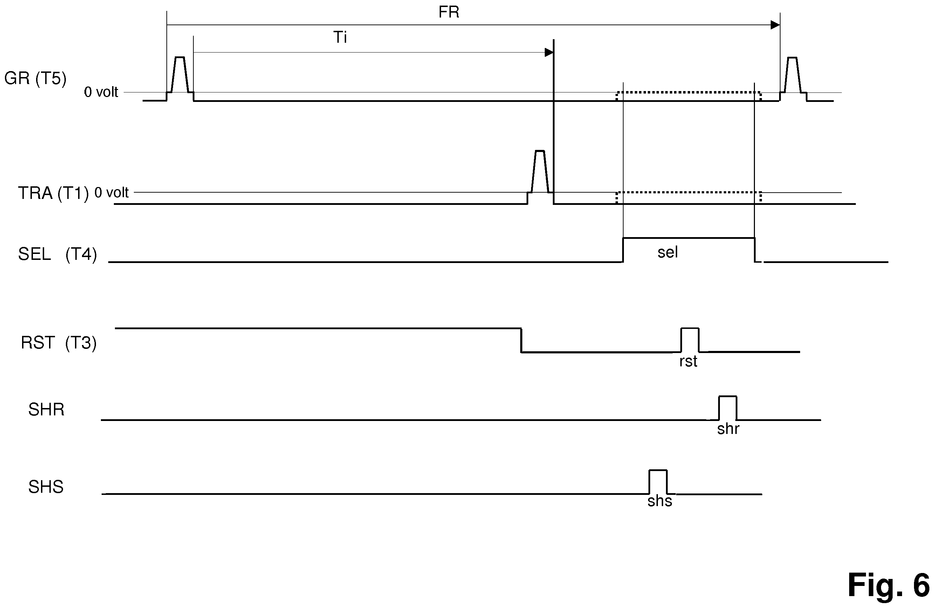

La figure 6 représente le chronogramme général de fonctionnement du capteur. Il est semblable à celui de la figure 2 et les explications sont les mêmes, les différences étant les suivantes : le potentiel bas des signaux TRA et GR (ou au moins l'un des deux) est ici négatif pendant la durée d'intégration de charges ; et la forme du signal de commande de transfert et du signal de réinitialisation comporte, au moins pour la descente du potentiel positif vers le potentiel bas négatif, un plateau de durée finie (non nulle) au potentiel zéro comme décrit en référence aux figures 4A et 4B. La durée du signal de commande de transfert (ou de réinitialisation) peut être de l'ordre de 1 milliseconde.

On notera que sur le schéma de la figure 6 le potentiel bas du signal de commande de transfert est négatif pendant toute la période d'intégration de charges et reste bas pendant la lecture des charges (c'est-à-dire pendant les signaux SEL de sélection des lignes successives). Toutefois, comme cela est représenté par un trait pointillé, le signal de commande de transfert pourrait être remis au potentiel zéro pendant les phases de lecture. La pompe de charges n'étant pas sollicitée pendant la lecture, on n'amène pas de bruit parasite sur le nœud de stockage, lié à des signaux parasites de commutation haute fréquence de la pompe. Sur la figure 6 comme sur la figure 2, on n'a représenté les signaux de sélection sel et de lecture shs, rst, shr que pour une seule ligne ; ces signaux sont répétés successivement pour assurer la sélection et la lecture pour les différentes lignes.

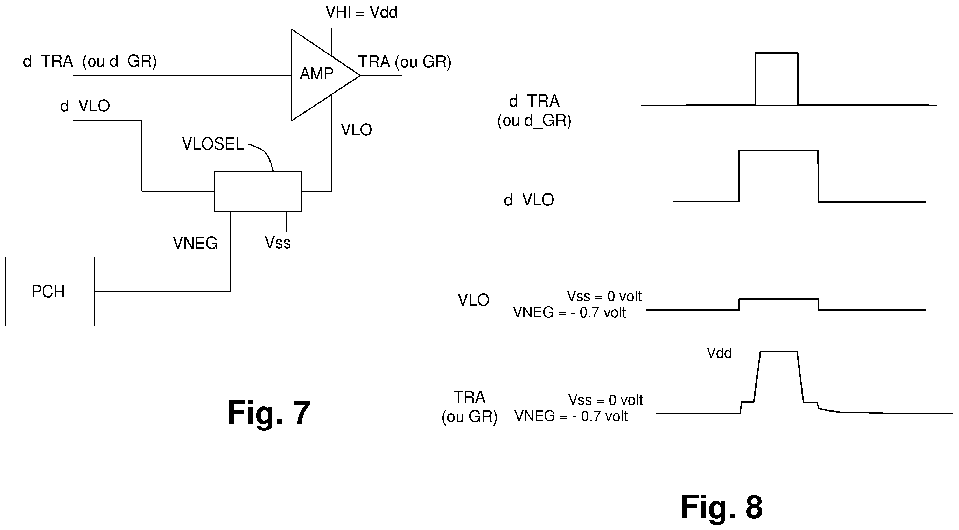

La figure 7 représente un circuit de commande d'une ligne reliant les grilles des transistors de transfert T1 de tous les pixels d'une même ligne de pixels du capteur. Ce circuit serait le même pour commander une ligne reliant les grilles des transistors de réinitialisation T5 d'une ligne de pixels. Chaque circuit de commande comporte essentiellement un amplificateur de puissance AMP et un sélecteur de tension associé. L'amplificateur AMP est capable de fournir un courant de charge des capacités de grille de tous les transistors de la ligne, typiquement un courant maximum de 50 à 100 microampères ; le fait que le courant de sortie de l'amplificateur soit limité définit une pente de montée pour le signal appliqué aux grilles de la ligne ; par exemple un courant limité à 100 microampères définit un temps de montée ou descente d'environ 250 nanosecondes si la capacité de ligne est de 6 picofarads.

L'amplificateur AMP est alimenté entre une tension haute VHI qui peut être la tension Vdd (3,3 volts par exemple) fournie directement par une borne d'alimentation générale positive du capteur, et une tension basse VLO qui est fournie par le sélecteur de tension VLOSEL.

Le sélecteur de tension reçoit à la fois le potentiel d'alimentation bas Vss fourni par une borne d'alimentation générale au potentiel zéro, et un potentiel négatif VNEG fourni par une pompe de charge PCH ; il fournit à sa sortie l'un ou l'autre des potentiels Vss et VNEG selon le signal logique qu'il reçoit sur son entrée de commande d_VLO. L'amplificateur est donc alimenté soit entre Vdd et Vss, donc par les deux bornes d'alimentation, soit entre Vdd et VNEG, donc entre la borne d'alimentation positive et la sortie de la pompe de charge, selon l'état haut ou bas respectivement du signal d_VLO. La pompe de charge est commune à tous les circuits de commande si ces circuits sont affectés chacun à une ligne respective de pixels.

L'amplificateur AMP reçoit par ailleurs sur son entrée une impulsion de commande logique d_TRA, qui est fournie par un séquenceur (non représenté) qui établit les différents signaux cycliques de fonctionnement du capteur. Le signal d_TRA représente l'ordre de transfert à la fin d'une durée d'intégration. Sa valeur est un niveau logique bas 0 pendant toute la durée d'intégration ; elle passe au niveau logique haut 1 uniquement pendant la durée totale du signal de transfert représenté aux figures 4A et 4B. Lorsque d_TRA est au niveau bas, l'amplificateur fournit à sa sortie la tension VLO, c'est-à-dire soit Vss soit VNEG. Lorsque d_TRA est au niveau logique haut, l'amplificateur fournit à sa sortie la tension VHI, c'est-à-dire Vdd.

Les mêmes explications s'appliquent pour le signal GR.

Le séquenceur fournit par ailleurs le signal logique d_VLO destiné à commander le sélecteur de tension VLOSEL. Lorsque le signal d_VLO est au niveau bas, le sélecteur de tension fournit la tension négative VNEG de -0,7 volt à l'amplificateur. Lorsque d_VLO est haut, le sélecteur fournit Vss.

La figure 8 représente les signaux de commande d_VLO et d_TRA, et le signal de commande de transfert TRA qui en résulte.

Lorsque d_VLO et d_TRA sont au niveau bas, la pompe de charge fournit VNEG à l'amplificateur et ce dernier fournit VNEG à la ligne de grilles. C'est le cas pendant toute la durée d'intégration Ti.

Lorsque d_VLO passe au niveau haut, l'amplificateur reçoit la tension Vss de la borne d'alimentation basse du capteur. L'amplificateur fournit Vss sur sa sortie.

Lorsque d_TRA passe ensuite au niveau logique haut, la sortie TRA de l'amplificateur passe à Vdd avec un temps de montée non nul défini par les possibilités maximales de fourniture de courant sortant de l'amplificateur. TRA reste ensuite à Vdd pendant la durée du signal d_TRA. Il redescend au niveau Vss à la fin du signal d_TRA avec un temps de descente non nul défini par les possibilités maximales d'absorption de courant entrant de l'amplificateur. Et enfin, on voit que le signal TRA retrouve lentement la tension négative VNEG à la fin du signal d_VLO. Ce retour lent est dû au fait que la tension VNEG est fournie par la pompe de charge ; celle-ci fournit une tension qui n'atteint que progressivement la tension nominale négative qui lui est demandée car elle est chargée au travers de tous les amplificateurs par toutes les grilles des lignes du capteur.

Si on souhaite accélérer le retour de la tension négative à sa valeur nominale, par exemple -0,7 volts, on peut prévoir de mettre en parallèle avec la pompe de charge PCH une ou plusieurs autres pompes de charge qui ne sont mises en service que si la tension VNEG chute en valeur absolue au-delà d'une valeur limite. La pompe de charge principale PCH assure le maintien à -0,7 volt pendant la durée d'intégration, la ou les autres pompes ne fonctionnant qu'à la fin du signal d_VLO. Les sorties des pompes de charges sont mises en parallèle. Un régulateur de tension placé en sortie de l'ensemble en parallèle compare la tension de sortie de la pompe de charge principale à une valeur de consigne. Si l'écart est trop important le régulateur fournit un signal de mise en service des pompes de charges auxiliaires.

Tout ce qui vient d'être dit à propos du signal TRA en référence aux figures 7 et 8 est applicable également au signal de réinitialisation GR. Si le transistor T5 doit assurer une fonction d'anti-éblouissement pendant la durée d'intégration, il est souhaitable que la tension négative appliquée à sa grille pendant cette durée impose dans le semiconducteur une barrière de potentiel légèrement plus basse que la barrière de potentiel créée au même moment sous la grille du transistor de transfert. On peut y parvenir en prévoyant que la tension de seuil du transistor T5 est plus faible que la tension de seuil du transistor T1. Ceci peut se faire en ayant pour ces deux transistors des dopages de canal différents, ou des épaisseurs d'oxyde de grille différentes. On peut aussi prévoir que la tension négative appliquée à la grille du transistor T5 pendant la phase d'intégration soit légèrement supérieure (moins négative) que celle appliquée à la grille du transistor T1. Mais on peut aussi prévoir que le transistor T5 ne sert pas de transistor d'anti-éblouissement et que des moyens d'anti-éblouissement auxiliaires sont prévus.

## Revendications

1. Procédé de capture d'image dans un capteur d'image à matrice de lignes et colonnes de pixels actifs, alimenté entre une première borne d'alimentation à potentiel zéro (Vss) et une deuxième borne d'alimentation à un potentiel d'alimentation positif (Vdd), dans lequel chaque pixel comporte une photodiode (PH) formée dans une couche active semiconductrice au potentiel de référence zéro, une grille de transfert de charges (T1) pour transférer les charges générées par la lumière de la photodiode vers un nœud de stockage de charges (ND), le procédé comportant une étape de transfert global des charges des photodiodes de tous les pixels de la matrice vers les nœuds de stockage correspondants, et étant tel que la grille de transfert est portée par une pompe de charge (PCH) à un potentiel négatif (VNEG) pendant la majeure partie de la durée (Ti) d'intégration de charges et reçoit un signal de commande de transfert (TRA) commun à tous les pixels pendant une fenêtre temporelle de transfert, le signal de commande de transfert comportant successivement au moins une première phase pendant laquelle il passe du potentiel négatif (VNEG) à un potentiel de transfert positif, une deuxième phase pendant laquelle il passe du potentiel de transfert positif au potentiel zéro fourni par la première borne d'alimentation, une troisième phase de durée finie (Δt) pendant laquelle il reste au potentiel zéro, et une quatrième phase dans laquelle il repasse du potentiel zéro au potentiel négatif (VNEG) fourni par la pompe de charge;
le procédé de capture d'image étant **caractérisé en ce que** pendant la montée du potentiel négatif au potentiel positif, on donne à la montée de l'impulsion de transfert la même forme qu'à la descente, avec une phase de montée du potentiel négatif fourni par la pompe de charge au potentiel zéro fourni par la première borne d'alimentation, une phase de durée finie à ce potentiel, et une phase de montée du potentiel zéro au potentiel positif qui assure le transfert de charges.

2. Procédé de capture d'image dans un capteur d'image à matrice de lignes et colonnes de pixels actifs, alimenté entre une première borne d'alimentation à potentiel zéro (Vss) et une deuxième borne d'alimentation à un potentiel d'alimentation positif (Vdd), dans lequel chaque pixel comporte une photodiode (PH) formée dans une couche active semiconductrice au potentiel de référence zéro, une grille de transfert de charges (T1) pour transférer les charges générées par la lumière de la photodiode vers un nœud de stockage de charges (ND), et une grille de réinitialisation (T5) du potentiel de la photodiode, le procédé comportant une étape de transfert global des charges des photodiodes de tous les pixels de la matrice vers les nœuds de stockage correspondants et une étape de réinitialisation de toutes les photodiodes, et étant tel que la grille de transfert et la grille de réinitialisation sont portées par une pompe de charge (PCH) à un potentiel négatif (VNEG) pendant la majeure partie de la durée (Ti) d'intégration de charges et reçoit un signal de commande de transfert (TRA) et un signal de réinitialisation (GR) communs à tous les pixels pendant une fenêtre temporelle de transfert et une fenêtre de réinitialisation, le signal de commande de transfert et le signal de réinitialisation comportant chacun successivement au moins une première phase pendant laquelle il passe du potentiel négatif (VNEG) à un potentiel de transfert ou de réinitialisation positif, une deuxième phase pendant laquelle il passe du potentiel de transfert ou de réinitialisation positif au potentiel zéro fourni par la première borne d'alimentation, une troisième phase de durée finie (Δt) pendant laquelle il reste au potentiel zéro, et une quatrième phase dans laquelle il repasse du potentiel zéro au potentiel négatif (VNEG) fourni par la pompe de charge ;
le procédé de capture d'image étant **caractérisé en ce que** pendant la montée du potentiel négatif au potentiel positif, on donne à la montée de l'impulsion de transfert la même forme qu'à la descente, avec une phase de montée du potentiel négatif fourni par la pompe de charge au potentiel zéro fourni par la première borne d'alimentation, une phase de durée finie à ce potentiel, et une phase de montée du potentiel zéro au potentiel positif qui assure le transfert de charges.

3. Procédé de capture d'image selon l'une des revendications 1 et 2, **caractérisé en ce que** la pompe de charge qui fonctionne pour maintenir une tension négative pendant la durée d'intégration est assistée d'au moins une pompe de charge auxiliaire mise en service à la fin de l'impulsion de transfert de charges dans le cas de la revendication 1, et à la fin de l'impulsion de transfert de charges et la fin de l'impulsion de réinitialisation dans le cas de la revendication 2.

## Patentansprüche

1. Verfahren zur Bilderfassung in einem Bildsensor mit einer Matrix aus Zeilen und Spalten aktiver Pixel, welche durch eine erste Speisungsklemme mit Nullpotenzial (Vss) und durch eine zweite Speisungsklemme mit einem positiven Speisungspotenzial (Vdd) gespeist wird, wobei jeder Pixel eine Photodiode (PH) umfasst, welche in einer aktiven Halbleiterschicht mit Bezugspotenzial null gebildet ist, ein Ladungsübertragungsgitter (T1) zum Übertragen der durch das Licht der Photodiode erzeugten Ladungen an einen Ladungsspeicherknoten (ND), wobei das Verfahren einen Schritt der globalen Übertragung der Ladungen der Photodioden aller Pixel der Matrix an die entsprechenden Ladungsspeicherknoten umfasst, und so gestaltet ist, dass das Ladungsübertragungsgitter durch eine Ladungspumpe (PCH) über einen Hauptteil der Ladungs-Integrationsdauer (Ti) auf ein negatives Potenzial (VNEG) gebracht wird, und ein für alle Pixel während eines Übertragungszeitfensters gemeinsames Übertragungssteuersignal (TRA) empfängt, wobei das Übertragungssteuersignal nacheinander mindestens eine erste Phase umfasst, während welcher es vom negativen Potenzial (VNEG) auf ein positives Übertragungspotenzial gebracht wird, eine zweite Phase, während welcher es von dem positiven Übertragungspotenzial auf das durch die erste Speisungsklemme bereitgestellte Nullpotenzial gebracht wird, eine dritte Phase mit endlicher Dauer (Δt), während welcher es beim Nullpotenzial bleibt, und eine vierte Phase, während welcher es vom Nullpotenzial zu dem durch die Ladungspumpe bereitgestellten negativen Potenzial (VNEG) zurückkehrt;
wobei das Verfahren zur Bilderfassung **dadurch gekennzeichnet ist, dass** beim Anstieg des negativen Potenzials zum positiven Potenzial man dem Anstieg des Übertragungsimpulses dieselbe Form gibt wie beim Abstieg, mit einer Anstiegsphase des negativen Potenzials, welches durch die Ladungspumpe bereitgestellt wird, zum Nullpotenzial, welches durch die erste Speisungsklemme bereitgestellt wird, einer Phase endlicher Dauer bei diesem Potenzial, und einer Phase des Potenzialanstiegs zum positiven Potenzial, welches die Ladungsübertragung gewährleistet.

2. Verfahren zur Bilderfassung in einem Bildsensor mit einer Matrix aus Zeilen und Spalten aktiver Pixel, welche durch eine erste Speisungsklemme mit Nullpotenzial (Vss) und durch eine zweite Speisungsklemme mit einem positiven Speisungspotenzial (Vdd) gespeist wird, wobei jeder Pixel eine Photodiode (PH) umfasst, welche in einer aktiven Halbleiterschicht mit Bezugspotenzial null gebildet ist, ein Ladungsübertragungsgitter (T1) zum Übertragen der durch das Licht der Photodiode erzeugten Ladungen an einen Ladungsspeicherknoten (ND), und ein Reinitialisierungsgitter (T5) des Potenzials der Photodiode, wobei das Verfahren einen Schritt der globalen Übertragung der Ladungen der Photodioden aller Pixel der Matrix an die entsprechenden Ladungsspeicherknoten und einen Schritt der Reinitialisierung aller Photodioden umfasst, und so gestaltet ist, dass das Ladungsübertragungsgitter und das Reinitialisierungsgitter durch eine Ladungspumpe (PCH) über einen Hauptteil der Ladungs-Integrationsdauer (Ti) auf ein negatives Potenzial (VNEG) gebracht werden, und ein für alle Pixel während eines Übertragungszeitfensters und eines Reinitialisierungsfensters gemeinsames Übertragungssteuersignal (TRA) und ein gemeinsames Reinitialisierungssignal (GR) empfangen, wobei das Übertragungssteuersignal und das Reinitialisierungssignal jeweils nacheinander mindestens eine erste Phase umfassen, während welcher sie vom negativen Potenzial (VNEG) auf ein positives Übertragungs- oder Reinitialisierungspotenzial gebracht werden, eine zweite Phase, während welcher sie von dem positiven Übertragungs- oder Reinitialisierungspotenzial auf das durch die erste Speisungsklemme bereitgestellte Nullpotenzial gebracht werden, eine dritte Phase mit endlicher Dauer (Δt), während welcher sie beim Nullpotenzial bleiben, und eine vierte Phase, während welcher sie vom Nullpotenzial zu dem durch die Ladungspumpe bereitgestellten negativen Potenzial (VNEG) zurückkehren;
wobei das Verfahren zur Bilderfassung **dadurch gekennzeichnet ist, dass** beim Anstieg des negativen Potenzials zum positiven Potenzial man dem Anstieg des Übertragungsimpulses dieselbe Form gibt wie beim Abstieg, mit einer Anstiegsphase des negativen Potenzials, welches durch die Ladungspumpe bereitgestellt wird, zum Nullpotenzial, welches durch die erste Speisungsklemme bereitgestellt wird, einer Phase endlicher Dauer bei diesem Potenzial, und einer Phase des Potenzialanstiegs zum positiven Potenzial, welches die Ladungsübertragung gewährleistet.

3. Verfahren zur Bilderfassung nach einem der Ansprüche 1 und 2, **dadurch gekennzeichnet, dass** die Ladungspumpe, die arbeitet, um eine negative Spannung über die Integrationsdauer zu halten, durch mindestens eine Hilfs-Ladungspumpe unterstützt wird, welche am Ende des Ladungsübertragungsimpulses im Falle des Anspruchs 1, und am Ende des Ladungsübertragungsimpulses und am Ende des Rehinitialisierungsimpulses im Fall des Anspruchs 2 in Betrieb genommen wird.

## Claims

1. Method for capturing an image in an image sensor with a matrix of rows and columns of active pixels, powered between a first zero potential power supply terminal (Vss) and a second power supply terminal with a positive power supply potential (Vdd), wherein each pixel comprises a photodiode (PH) formed within an active semiconductor layer with a zero reference potential, a charge transfer gate (T1) for transferring the charges generated by the light from the photodiode to a charge storage node (ND), the method comprising a step for global transfer of the charges from the photodiodes of all the pixels of the matrix to the corresponding storage nodes, and such that a negative potential (VNEG) is applied to the transfer gate by a charge pump (PCH) during the major part of the charge integration time (Ti) and receives a transfer control signal (TRA) common to all the pixels during a transfer time window, the transfer control signal successively comprising at least a first phase during which it goes from the negative potential (VNEG) to a positive transfer potential, a second phase during which it goes from the positive transfer potential to the zero potential supplied by the first power supply terminal, a third phase of finite duration (Δt) during which it remains at the zero potential, and a fourth phase in which it goes back from the zero potential to the negative potential (VNEG) supplied by the charge pump;
the method for capturing an image being **characterized in that**, during the rise from the negative potential to the positive potential, the same shape is given to the rising edge of the transfer pulse as to the falling edge, with a rise phase from the negative potential supplied by the charge pump to the zero potential supplied by the first power supply terminal, a phase of finite duration at this potential, and a rise phase from the zero potential to the positive potential, which provides the transfer of charges.

2. Method for capturing an image in an image sensor with a matrix of rows and columns of active pixels, powered between a first zero potential power supply terminal (Vss) and a second power supply terminal with a positive power supply potential (Vdd), wherein each pixel comprises a photodiode (PH) formed within an active semiconductor layer with a zero reference potential, a charge transfer gate (T1) for transferring the charges generated by the light from the photodiode to a charge storage node (ND), and a gate (T5) for resetting the potential of the photodiode, the method comprising a step for global transfer of the charges from the photodiodes of all the pixels of the matrix to the corresponding storage nodes and a step for resetting all the photodiodes, and such that a negative potential (VNEG) is applied to the transfer gate and the reset gate by a charge pump (PCH) during the major part of the charge integration time (Ti) and receive a transfer control signal (TRA) and a reset signal (GR), both common to all the pixels during a transfer time window and a reset window, the transfer control signal and the reset signal each successively comprising at least a first phase during which it goes from the negative potential (VNEG) to a positive transfer or reset potential, a second phase during which it goes from the positive transfer or reset potential to the zero potential supplied by the first power supply terminal, a third phase of finite duration (Δt) during which it remains at the zero potential, and a fourth phase in which it goes back from the zero potential to the negative potential (VNEG) supplied by the charge pump;
the method for capturing an image being **characterized in that**, during the rise from the negative potential to the positive potential, the same shape is given to the rising edge of the transfer pulse as to the falling edge, with a rise phase from the negative potential supplied by the charge pump to the zero potential supplied by the first power supply terminal, a phase of finite duration at this potential, and a rise phase from the zero potential to the positive potential, which provides the transfer of charges.

3. Method for capturing an image according to either of claims 1 and 2, **characterized in that** the charge pump that operates for maintaining a negative voltage over the duration of the integration is assisted by at least one auxiliary charge pump put into operation at the end of the charge transfer pulse, in the case of claim 1, and at the end of the charge transfer pulse and the end of the reset pulse, in the case of claim 2.
